# EUROPÄISCHE PATENTSCHRIFT

(11) **EP 3 173 254 B1**
(45) Veröffentlichungstag und Bekanntmachung des Hinweises auf die Patenterteilung: **08.04.2020**
(21) Anmeldenummer: 16184639.9
(22) Anmeldetag: 18.08.2016
(51) Int. Cl.: B60C 11/03

(54) **FAHRZEUGLUFTREIFEN**
PNEUMATIC TYRES FOR A VEHICLE
PNEUMATIQUES DE VÉHICULE

(30) Priorität: 27.11.2015 DE 102015223537
(43) Veröffentlichungstag der Anmeldung: 31.05.2017
(73) Patentinhaber: Continental Reifen Deutschland GmbH, 30165 Hannover (DE)
(72) Erfinder: Baptista, Diogo, 30159 Hannover (DE); Domscheit, Andreas, 30459 Hannover (DE); Wagner, Kay, 31311 Uetze (DE); Schürmann, Oliver, 30855 Langenhagen (DE)
(74) Vertreter: Finger, Karsten

(56) Entgegenhaltungen:
- JP-A- 2001 219 711
- US-A- 3 838 725

## Beschreibung

### Fahrzeugluftreifen

Die Erfindung betrifft einen Fahrzeugluftreifen in Radialbauart mit einem Laufstreifen mit mindestens sechs Umfangsrillen, welche an der Laufstreifenoberfläche jeweils eine Breite von 3,0 mm bis 8,0 mm und in radialer Richtung jeweils eine Tiefe aufweisen, wobei die Tiefe der mittleren Umfangsrillen größer ist als die Tiefe der schulterseitigen Umfangsrillen.

Fahrzeugluftreifen mit einem sechs Umfangsrillen aufweisenden Laufstreifen sind in unterschiedlichen Ausführungsvarianten bekannt, wobei ein Reifen der eingangs genannten Art beispielsweise in Fig. 2 der DE 2 308 824 A1 gezeigt ist. Der dort dargestellte Fahrzeugluftreifen weist einen mit sechs Umfangsrillen versehenen Laufstreifen auf, wobei die Tiefe der Umfangsrillen höchstens 10,0 mm und die Breite der Umfangsrillen an der Laufstreifenoberfläche 6,0 mm betragen. Die Tiefe der mittleren Umfangsrillen ist größer als die Tiefe der schulterseitigen Umfangsrillen.

Aus der EP 1 961 586 B1 ist ein Fahrzeugluftreifen, dessen Laufstreifen ebenfalls sechs Umfangsrillen aufweist, bekannt. Die Umfangsrillen weisen übereinstimmende Tiefen auf, welche zumindest 8,0 mm, vorzugsweise mindestens 9,0 mm und besonders bevorzugt bis zu 12,0 mm beträgt.

Der aus der EP 0 175 829 B1 bekannte Fahrzeugluftreifen weist ebenfalls einen mit sechs Umfangsrillen versehenen Laufstreifen auf, wobei weiter laufstreifenaußenseitig verlaufende Umfangsrillen gegenüber weiter laufstreifeninnseitig verlaufenden Umfangsrillen breiter ausgeführt sind. Dies sowie die am Laufstreifen ausgebildeten Profilbänder und Profilblockreihen sollen dem Reifen gute Hochgeschwindigkeitseigenschaften sowie gute Fahreigenschaften auf Fahrbahnen mit Fahrbahnrillen verleihen.

Ein weiterer sechs Umfangsrillen im Laufstreifen aufweisender Fahrzeugluftreifen, welcher für den Hochgeschwindigkeitseinsatz geeignet ist, ist aus der DE 38 77 642 T2 bekannt. Die vorgesehenen Umfangsrillen weisen eine bestimmte, von der Laufstreifenbreite abhängige Breite auf.

Auch aus der DE 10 2011 083 509 A1 ist ein Fahrzeugluftreifen mit einem sechs Umfangsrillen aufweisenden Laufstreifen bekannt. Die Umfangsrillen weisen voneinander abweichende Breiten auf, wobei die Breite der breitesten Umfangsrille 5,0 mm bis 15,0 mm beträgt. Ein gute Griffeigenschaften auf Sandfahrbahnen aufweisender Fahrzeugluftreifen, welcher ein Diagonalreifen ist und dessen Laufstreifen ebenfalls sechs Umfangsrillen aufweist, ist aus der JP 2001 219 711 A bekannt. Dabei ist die Tiefe der mittleren Umfangsrillen größer als die Tiefe der schulterseitigen Umfangsrillen. Aus der US 3 838 725 A ist ein als Referenzreifen bezeichneter Reifen bekannt, in dessen Laufstreifen ebenfalls sechs Umfangsrillen enthalten sind, wobei die Tiefe der mittleren Umfangsrillen größer ist als die Tiefe der schulterseitigen Umfangsrillen.

Es ist bekannt, dass bei Fahrzeugluftreifen zwischen unterschiedlichen Fahr- bzw. Reifeneigenschaften Zielkonflikte bestehen, sodass die Verbesserung einer Fahr- bzw. Reifeneigenschaft mit der Verschlechterung einer anderen Fahr- bzw. Reifeneigenschaft einhergeht.

Für den Rollwiderstand eines Fahrzeugluftreifens ist es beispielsweise von Vorteil, Umfangsrillen mit einer möglichst geringen Tiefe vorzusehen, welche eine geringe Dämpfung (Kompression) der an die Umfangsrillen anschließenden Profilrippen beim Abrollen des Fahrzeugluftreifens zur Folge hat. Dies geht mit einer Verbesserung, d.h. Verringerung, des Rollwiderstandes einher.

Für die Handlingeigenschaften, wie das Ansprechverhalten auf Lenkkräfte sowie die Übertragung von Lenkkräften auf die Fahrbahn, ist es vorteilhaft, wenn eine möglichst große Kontaktfläche zwischen dem Laufstreifen und der Fahrbahn besteht. Eine große Kontaktfläche kann mittels eines einen geringen Negativanteil aufweisenden Laufstreifens, d.h. insbesondere mittels eines wenige Rillen aufweisenden Laufstreifens, erreicht werden. Ferner sind geringe Profiltiefen für die Handlingeigenschaften von Vorteil, da dadurch eine höhere Steifigkeit der Profilpositive erzielt wird.

Gute Aquaplaningeigenschaften hingegen können üblicherweise mittels eines einen großen Negativanteil aufweisenden Laufstreifens sichergestellt werden. Ein Laufstreifen mit vielen Umfangsrillen, welche große Tiefen aufweisen, ist daher für die Aquaplaningeigenschaften von Vorteil.

Der Erfindung liegt daher die Aufgabe zu Grunde, bei einem Reifen der eingangs genannten Art den zwischen guten Aquaplaningeigenschaften und vorteilhaften Handlingeigenschaften bestehenden Zielkonflikt besser als bisher zu lösen, wobei weiterhin ein niedriger Rollwiderstand gewährleistet sein soll.

Die gestellte Aufgabe wird erfindungsgemäß dadurch gelöst, dass die Tiefe der schulterseitigen Umfangsrillen 4,0 mm bis 6,0 mm und die Tiefe der mittleren Umfangsrillen 5,0 mm bis 7,0 mm beträgt, wobei die Tiefe der mittleren Umfangsrillen um mindestens 0,5 mm größer ist als Tiefe der schulterseitigen Umfangsrillen.

Durch die Erfindung wird ein mindestens sechs Umfangsrillen im Laufstreifen aufweisender Fahrzeugluftreifen zur Verfügung gestellt, welcher den oben erwähnten Zielkonflikt gut löst. Die tiefer ausgeführten mittleren Umfangsrillen sorgen für ein gutes Wasserdrainagevermögen und daher gute Aquaplaningeigenschaften. Die mit einer geringeren Tiefe ausgeführten schulterseitigen Umfangsrillen bewirken eine höhere Steifigkeit der Profilpositive in den Schulterbereichen und sorgen daher für gute Handlingeigenschaften. Sämtliche Umfangsrillen sind im Vergleich zu Umfangsrillen in herkömmlich ausgeführten Laufstreifen seichter, sodass der Reifen einen niedrigen Rollwiderstand besitzt.

Bei einer bevorzugten Ausführungsform beträgt die Tiefe der schulterseitigen Umfangsrillen 4,5 mm bis 5,5 mm und die Tiefe der mittleren Umfangsrillen 5,5 mm bis 6,5 mm. Mit derartigen Umfangsrillen kann der Zielkonflikt zwischen guten Aquaplaningeigenschaften und guten Handlingeigenschaften besonders gut gelöst werden.

Für besonders gute Aquaplaningeigenschaften ist es ferner von Vorteil, wenn die Tiefe der mittleren Umfangsrillen um bis zu 1,0 mm größer ist als Tiefe der schulterseitigen Umfangsrillen.

Vorzugsweise weisen die mittleren Umfangsrillen übereinstimmende Tiefen auf. Die schulterseitigen Umfangsrillen weisen vorzugsweise ebenfalls übereinstimmende Tiefen auf. Durch diese Maßnahmen lassen sich die Aquaplaningeigenschaften und die Handlingeigenschaften besonders gut aufeinander abstimmen.

Zur Lösung des oben erwähnten Zielkonfliktes sind ferner die nachfolgenden bevorzugten Ausführungsvarianten besonders gut geeignet. Bei einer dieser Ausführungsvarianten beträgt die Tiefe der mittleren Umfangsrillen 6,5 mm und die Tiefe der schulterseitigen Umfangsrillen 5,5 mm. Bei einer alternativen Ausführungsvariante beträgt die Tiefe der mittleren Umfangsrillen 6,0 mm und die Tiefe der schulterseitigen Umfangsrillen 5,0 mm. Bei einer weiteren besonders vorteilhaften Ausführungsform beträgt die Tiefe der mittleren Umfangsrillen 5,5 mm und die Tiefe der schulterseitigen Umfangsrillen 4,5 mm.

Bei einer weiteren bevorzugten Ausführungsvariante weisen die schulterseitigen Umfangsrillen und insbesondere auch die mittleren Umfangsrillen jeweils übereinstimmende Breiten auf. Dabei können die schulterseitigen Umfangsrillen eine geringere Breite besitzen als die mittleren Umfangsrillen. Möglich ist auch eine Ausführung, bei welcher sämtliche Umfangsrillen gleiche Breiten aufweisen.

Bei einer weiteren bevorzugten Ausführungsvariante weist der Laufstreifen mehr als sechs, insbesondere bis zu acht, Umfangsrillen auf. Überraschender Weise hat sich dabei herausgestellt, dass vor allem Fahrzeuginnengeräusche durch einen eine gerade Anzahl an Umfangsrillen im Laufstreifen verringert werden können. Steht die Reduktion der Fahrzeuginnengeräusche nicht im Focus, ist eine Ausführung mit sieben gemäß der Erfindung ausgeführten Umfangsrillen zur Lösung des genannten Zielkonfliktes ebenfalls vorteilhaft.

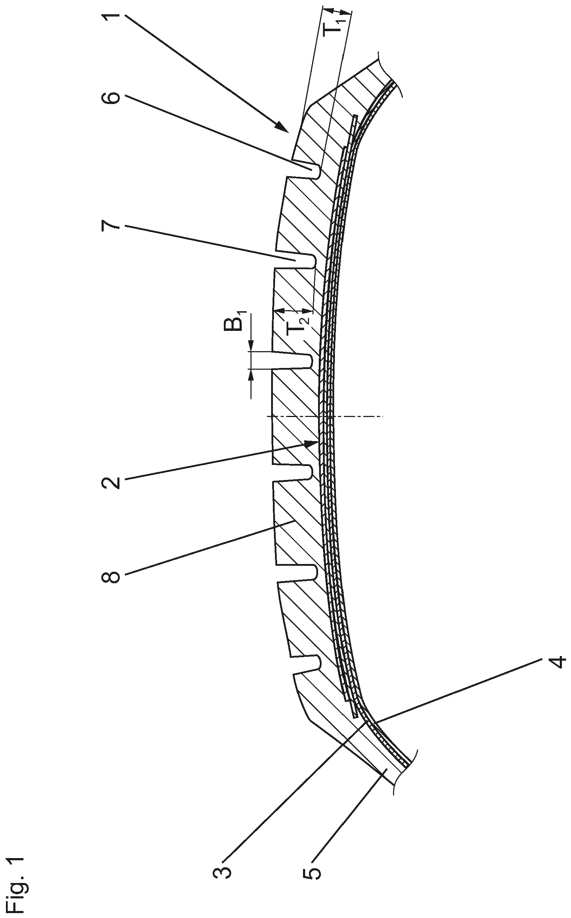

Weitere Merkmale, Vorteile und Einzelheiten der Erfindung werden nun anhand der Zeichnung, die schematisch ein Ausführungsbeispiel der Erfindung darstellt, näher beschrieben. Dabei zeigt die einzige Figur, Fig. 1, einen schematischen Querschnitt durch einen Fahrzeugluftreifen im Bereich des Laufstreifens mit einer Ausführungsform der Erfindung.

Gemäß der Erfindung ausgeführte Fahrzeugluftreifen sind Reifen in Radialbauart für Personenkraftwagen, Vans oder Light-Trucks. In Fig. 1 sind von den üblichen Bauteilen eines solchen Fahrzeugluftreifens ein Laufstreifen 1, ein radial innerhalb des Laufstreifens 1 angeordneter, insbesondere zweilagiger Gürtelverband 2, eine mit Festigkeitsträgern verstärkte Radialkarkasse 3 und eine luftdichte Innenschicht 4 dargestellt. Von den Seitenwänden 5 sind lediglich die axial äußeren Endabschnitte dargestellt. Die Wulstbereiche mit Wulstkernen, Kernprofilen und weiteren, gegebenenfalls in den Wulstbereichen vorgesehenen Verstärkungslagen sind nicht gezeigt.

Erfindungsgemäß ausgeführte Fahrzeugluftreifen weisen im Laufstreifen zumindest sechs Umfangsrillen auf. Umfangsrillen im Sinne der Erfindung sind solche in Umfangsrichtung des Laufstreifens 1 umlaufende Rillen, welche an der Laufstreifenoberfläche jeweils eine Breite B₁ von 3,0 mm bis 8,0 mm aufweisen. Beim gezeigten Ausführungsbeispiel weist der Laufstreifen 1 in seinem bodenberührenden Teil sechs Umfangsrillen, zwei schulterseitige Umfangsrillen 6 sowie vier im mittleren Bereich des Laufstreifens 1 verlaufende mittlere Umfangsrillen 7, auf. Die sechs Umfangsrillen 6, 7 verlaufen vorzugsweise jeweils gerade in Umfangsrichtung, können jedoch auch zick-zack- oder wellenförmig verlaufen oder zick-zack- oder wellenförmig verlaufende Abschnitte aufweisen. Die Umfangsrillen 6, 7 weisen zwei insbesondere jeweils gerade verlaufende Rillenflanken auf, welche im Querschnitt jeweils unter einem Winkel von vorzugsweise bis zu 10° zur radialen Richtung verlaufen.

Die Umfangsrillen 6, 7 gliedern den Laufstreifen 1 in Profilrippen 8, wobei unter einer Profilrippe sowohl eine Klotzreihe bestehend aus in Umfangsrichtung aufeinanderfolgenden Profilklötzen, welche durch Querrillen, Einschnitte oder dergleichen voneinander getrennt sind, als auch ein in Umfangsrichtung umlaufendes Profilband, welches beispielsweise lediglich mit schmalen Einschnitten, schmalen Rillen, Sacknuten und dergleichen versehen ist, verstanden wird.

Die Breite B₁ der Umfangsrillen 6, 7 ist über die Umfangserstreckung der Rillen 6, 7 zumindest im Wesentlichen konstant, wobei bei der gezeigten Ausführungsvariante sämtliche Umfangsrillen 6, 7 übereinstimmend breit ausgeführt sind. Die Umfangsrillen 6, 7 können jedoch auch voneinander abweichende Breiten aufweisen.

Sowohl die schulterseitigen Umfangsrillen 6 als auch die mittleren Umfangsrillen 7 weisen jeweils am Rillengrund ihre größte Tiefe auf, welche über die Umfangserstreckung der jeweiligen Umfangsrille 6, 7, abgesehen von lokal begrenzten seichteren Stellen bei Abriebindikatoren, konstant ist. Jede schulterseitige Umfangsrille 6 weist in radialer Richtung eine Tiefe T₁ auf, welche 4,0 mm bis 6,0 mm, insbesondere 4,5 mm bis 5,5 mm, beträgt. Jede mittlere Umfangsrille 7 weist in radialer Richtung eine Tiefe T₂ auf, welche um mindestens 0,5 mm, insbesondere um bis zu 1 mm, größer ist als Tiefe T₁ und 5,0 mm bis 7,0 mm, insbesondere 5,5 mm bis 6,5 mm, beträgt. Die Tiefen T₁ der schulterseitigen Umfangsrillen 6 und die Tiefen T₂ der mittleren Umfangsrillen 7 können jeweils übereinstimmen.

Bei einer besonders bevorzugten Ausführungsvariante beträgt die Tiefe T₂ 6,5 mm und die Tiefe T₁ 5,5 mm. Bei einer weiteren besonders bevorzugten Ausführungsvariante beträgt die Tiefe T₂ 6,0 mm und die Tiefe T₁ 5,0 mm. Gemäß einer dritten, ebenfalls besonders bevorzugten Ausführungsvariante beträgt die Tiefe T₂ 5,5 mm und die Tiefe T₁ 4,5 mm.

Bei einer weiteren Ausführungsvariante sind im Laufstreifen 1 mehr als sechs Umfangsrillen, insbesondere bis zu acht Umfangsrillen, vorgesehen, sodass der Laufstreifen fünf oder sechs mittlere Umfangsrillen aufweisen kann. Die jeweils vorgesehenen mittleren Umfangsrillen können auch voneinander unterschiedliche Tiefen aufweisen, wobei vorzugsweise weiter laufstreifenaußenseitig verlaufende Umfangsrillen eine geringere Tiefe als weiter laufstreifeninnseitig verlaufende Umfangsrillen aufweisen.

### Neue Bezugsziffernliste

- 1: Laufstreifen
- 2: Gürtelverband
- 3: Radialkarkasse
- 4: Innenschicht
- 5: Seitenwand
- 6: schulterseitige Umfangsrille
- 7: mittlere Umfangsrille
- 8: Profilrippe
- B₁: Breite
- T₁, T₂: Tiefe

## Patentansprüche

1. Fahrzeugluftreifen in Radialbauart mit einem Laufstreifen (1) mit mindestens sechs Umfangsrillen (6, 7), welche an der Laufstreifenoberfläche jeweils eine Breite (B₁) von 3,0 mm bis 8,0 mm und in radialer Richtung jeweils eine Tiefe (T₁, T₂) aufweisen, wobei die Tiefe (T₂) der mittleren Umfangsrillen (7) größer ist als die Tiefe (T₁) der beiden schulterseitigen Umfangsrillen (6),
**dadurch gekennzeichnet,**
**dass** die Tiefe (T₁) der schulterseitigen Umfangsrillen (6) 4,0 mm bis 6,0 mm und die Tiefe (T₂) der mittleren Umfangsrillen (7) 5,0 mm bis 7,0 mm beträgt, wobei die Tiefe (T₂) der mittleren Umfangsrillen (7) um mindestens 0,5 mm größer ist als Tiefe (T₁) der schulterseitigen Umfangsrillen (6).

2. Fahrzeugluftreifen nach Anspruch 1, **dadurch gekennzeichnet, dass** die Tiefe (T₁) der schulterseitigen Umfangsrillen (6) 4,5 mm bis 5,5 mm beträgt.

3. Fahrzeugluftreifen nach Anspruch 1 oder 2, **dadurch gekennzeichnet, dass** die Tiefe (T₂) der mittleren Umfangsrillen (7) 5,5 mm bis 6,5 mm beträgt.

4. Fahrzeugluftreifen nach einem der Ansprüche 1 bis 3, **dadurch gekennzeichnet, dass** die Tiefe (T₂) der mittleren Umfangsrillen (7) bis zu 1,0 mm größer ist als Tiefe (T₁) der schulterseitigen Umfangsrillen (6).

5. Fahrzeugluftreifen nach einem der Ansprüche 1 bis 4, **dadurch gekennzeichnet, dass** die schulterseitigen Umfangsrillen (6) übereinstimmende Tiefen (T₁) aufweisen.

6. Fahrzeugluftreifen nach einem der Ansprüche 1 bis 4, **dadurch gekennzeichnet, dass** die mittleren Umfangsrillen (7) übereinstimmende Tiefen (T₂) aufweisen.

7. Fahrzeugluftreifen nach einem der Ansprüche 1 bis 6, **dadurch gekennzeichnet, dass** die Tiefe (T₂) der mittleren Umfangsrillen (7) 6,5 mm und die Tiefe (T₁) der schulterseitigen Umfangsrillen (6) 5,5 mm beträgt.

8. Fahrzeugluftreifen nach einem der Ansprüche 1 bis 6, **dadurch gekennzeichnet, dass** die Tiefe (T₂) der mittleren Umfangsrillen (7) 6,0 mm und die Tiefe (T₁) der schulterseitigen Umfangsrillen (6) 5,0 mm beträgt.

9. Fahrzeugluftreifen nach einem der Ansprüche 1 bis 6, **dadurch gekennzeichnet, dass** die Tiefe (T₂) der mittleren Umfangsrillen (7) 5,5 mm und die Tiefe (T₁) der schulterseitigen Umfangsrillen (6) 4,5 mm beträgt.

10. Fahrzeugluftreifen nach einem der Ansprüche 1 bis 9, **dadurch gekennzeichnet, dass** die mittleren Umfangsrillen (7) an der Laufstreifenoberfläche übereinstimmende Breiten (B₁) aufweisen.

11. Fahrzeugluftreifen nach einem der Ansprüche 1 bis 10, **dadurch gekennzeichnet, dass** die schulterseitigen Umfangsrillen (6) an der Laufstreifenoberfläche übereinstimmende Breiten (B₁) aufweisen.

12. Fahrzeugluftreifen nach einem der Ansprüche 1 bis 11, **dadurch gekennzeichnet, dass** der Laufstreifen (1) mehr als sechs, insbesondere bis zu acht, Umfangsrillen (6, 7) aufweist.

## Claims

1. Pneumatic vehicle tyre of a radial type of construction, with a tread (1) comprising at least six circumferential grooves (6, 7), which respectively have on the tread surface a width (B₁) of 3.0 mm to 8.0 mm and respectively have in the radial direction a depth (T₁, T₂), the depth (T₂) of the middle circumferential grooves (7) being greater than the depth (T₁) of the two shoulder-side circumferential grooves (6),
**characterized**
**in that** the depth (T₁) of the shoulder-side circumferential grooves (6) is 4.0 mm to 6.0 mm and the depth (T₂) of the middle circumferential grooves (7) is 5.0 mm to 7.0 mm, the depth (T₂) of the middle circumferential grooves (7) being at least 0.5 mm greater than the depth (T₁) of the shoulder-side circumferential grooves (6).

2. Pneumatic vehicle tyre according to Claim 1, **characterized in that** the depth (T₁) of the shoulder-side circumferential grooves (6) is 4.5 mm to 5.5 mm.

3. Pneumatic vehicle tyre according to Claim 1 or 2, **characterized in that** the depth (T₂) of the middle circumferential grooves (7) is 5.5 mm to 6.5 mm.

4. Pneumatic vehicle tyre according to one of Claims 1 to 3, **characterized in that** the depth (T₂) of the middle circumferential grooves (7) is up to 1.0 mm greater than the depth (T₁) of the shoulder-side circumferential grooves (6).

5. Pneumatic vehicle tyre according to one of Claims 1 to 4, **characterized in that** the shoulder-side circumferential grooves (6) have coinciding depths (T₁).

6. Pneumatic vehicle tyre according to one of Claims 1 to 4, **characterized in that** the middle circumferential grooves (7) have coinciding depths (T₂).

7. Pneumatic vehicle tyre according to one of Claims 1 to 6, **characterized in that** the depth (T₂) of the middle circumferential grooves (7) is 6.5 mm and the depth (T₁) of the shoulder-side circumferential grooves (6) is 5.5 mm.

8. Pneumatic vehicle tyre according to one of Claims 1 to 6, **characterized in that** the depth (T₂) of the middle circumferential grooves (7) is 6.0 mm and the depth (T₁) of the shoulder-side circumferential grooves (6) is 5.0 mm.

9. Pneumatic vehicle tyre according to one of Claims 1 to 6, **characterized in that** the depth (T₂) of the middle circumferential grooves (7) is 5.5 mm and the depth (T₁) of the shoulder-side circumferential grooves (6) is 4.5 mm.

10. Pneumatic vehicle tyre according to one of Claims 1 to 9, **characterized in that** the middle circumferential grooves (7) have on the tread surface coinciding widths (B₁).

11. Pneumatic vehicle tyre according to one of Claims 1 to 10, **characterized in that** the shoulder-side circumferential grooves (6) have on the tread surface coinciding widths (B₁).

12. Pneumatic vehicle tyre according to one of Claims 1 to 11, **characterized in that** the tread (1) has more than six, in particular up to eight, circumferential grooves (6, 7).

## Revendications

1. Pneumatique de véhicule de construction radiale comprenant une bande de roulement (1) avec au moins six rainures périphériques (6, 7) qui présentent sur la surface de la bande de roulement à chaque fois une largeur (B₁) de 3,0 mm à 8,0 mm et dans la direction radiale à chaque fois une profondeur (T₁, T₂), la profondeur (T₂) des rainures périphériques centrales (7) étant supérieure à la profondeur (T₁) des deux rainures périphériques (6) du côté de l'épaulement, **caractérisé en ce que**
la profondeur (T₁) des rainures périphériques (6) du côté de l'épaulement vaut 4,0 mm à 6,0 mm et la profondeur (T₂) des rainures périphériques centrales (7) vaut 5,0 mm à 7,0 mm, la profondeur (T₂) des rainures périphériques centrales (7) étant supérieure d'au moins 0,5 mm à la profondeur (T₁) des rainures périphériques (6) du côté de l'épaulement.

2. Pneumatique de véhicule selon la revendication 1, **caractérisé en ce que** la profondeur (T₁) des rainures périphériques (6) du côté de l'épaulement vaut 4,5 mm à 5,5 mm.

3. Pneumatique de véhicule selon la revendication 1 ou 2, **caractérisé en ce que** la profondeur (T₂) des rainures périphériques centrales (7) vaut 5,5 mm à 6,5 mm.

4. Pneumatique de véhicule selon l'une quelconque des revendications 1 à 3, **caractérisé en ce que** la profondeur (T₂) des rainures périphériques centrales (7) est supérieure de jusqu'à 1,0 mm à la profondeur (T₁) des rainures périphériques (6) du côté de l'épaulement.

5. Pneumatique de véhicule selon l'une quelconque des revendications 1 à 4, **caractérisé en ce que** les rainures périphériques (6) du côté de l'épaulement présentent des profondeurs (T₁) coïncidentes.

6. Pneumatique de véhicule selon l'une quelconque des revendications 1 à 4, **caractérisé en ce que** les rainures périphériques centrales (7) présentent des profondeurs (T₂) coïncidentes.

7. Pneumatique de véhicule selon l'une quelconque des revendications 1 à 6, **caractérisé en ce que** la profondeur (T₂) des rainures périphériques centrales (7) vaut 6,5 mm et la profondeur (T₁) des rainures périphériques (6) du côté de l'épaulement vaut 5,5 mm.

8. Pneumatique de véhicule selon l'une quelconque des revendications 1 à 6, **caractérisé en ce que** la profondeur (T₂) des rainures périphériques centrales (7) vaut 6,0 mm et la profondeur (T₁) des rainures périphériques (6) du côté de l'épaulement vaut 5,0 mm.

9. Pneumatique de véhicule selon l'une quelconque des revendications 1 à 6, **caractérisé en ce que** la profondeur (T₂) des rainures périphériques centrales (7) vaut 5,5 mm et la profondeur (T₁) des rainures périphériques (6) du côté de l'épaulement vaut 4,5 mm.

10. Pneumatique de véhicule selon l'une quelconque des revendications 1 à 9, **caractérisé en ce que** les rainures périphériques centrales (7) présentent au niveau de la surface de la bande de roulement des largeurs (B₁) coïncidentes.

11. Pneumatique de véhicule selon l'une quelconque des revendications 1 à 10, **caractérisé en ce que** les rainures périphériques (6) du côté de l'épaulement présentent au niveau de la surface de la bande de roulements des largeurs (B₁) coïncidentes.

12. Pneumatique de véhicule selon l'une quelconque des revendications 1 à 11, **caractérisé en ce que** la bande de roulement (1) présente plus de six, en particulier jusqu'à huit, rainures périphériques (6, 7).
